# DEMANDE DE BREVET EUROPEEN

(11) **EP 0 780 343 A1**
(43) Date de publication de la demande: **25.06.1997**
(21) Numéro de dépôt: 96402741.1
(22) Date de dépôt: 16.12.1996
(51) Int. Cl.: C03B 27/06

(54) **Installation de trempe thermique d'articles creux en verre et tête de trempe pour une telle installation**

(30) Priorité: 22.12.1995 FR 9515369
(71) Demandeur: Coudamy, Gérard, 87000 Limoges (FR)
(72) Inventeur: Coudamy, Gérard, 87000 Limoges (FR)
(74) Mandataire: Loyer, Bertrand

(57) **Abrégé**

Les articles (1) à tremper thermiquement sont déplacés longitudinalement dans un équipement longue comportant une première zone (11) dans laquelle les articles sont réchauffés puis une zone de trempe.

Suivant l'invention, ladite zone de trempe est formée :
- d'une zone (12) dans laquelle des têtes de trempe (2) sont abaissées pour que chacune surmonte un article (1), et entraînées en translation de manière synchronisée avec les articles (1),
- d'une zone (13) dans laquelle est assurée la trempe individuelle de chaque article,
- d'une zone (14) dans laquelle les têtes de trempe (2) sont soulevées,
- d'une zone (15) de l'équipement dans laquelle est terminé le refroidissement des articles.

## Description

La présente invention concerne une installation de trempe thermique d'articles creux en verre.

L'on désigne sous la dénomination article creux en verre, les articles qui sont mis en forme sous leur forme définitive par opposition avec les articles en verre plats qui subissent une déformation telle qu'un bombage après une première mise en forme. A titre d'exemples d'articles creux en verre, l'on peut citer les verres de table, les tasses, les bols, les assiettes, les hublots pour machines à laver, les verres de protection pour éclairages ou encore les glaces de projecteurs de véhicules automobiles.

Ces articles sont mis en forme par exemple par pressage, soufflage ou centrifugation à une température élevée, par exemple 600 °C, puis sont trempés thermiquement.

La trempe thermique est effectuée soit immédiatement après la mise en forme, c'est-à-dire sur des articles chauds, soit sur des articles froids, par exemple à la suite d'une décoration.

Il est connu de réaliser la trempe dans des unités de traitement séparées de l'enceinte dans laquelle les articles sont chauffés. Les articles sont alors sortis du four pour être positionnés sur des machines de trempe où ils sont soumis à des jets de fluide de refroidissement. Les traitements réalisés dans de telles installations ne peuvent être de bonne qualité car les articles sont refroidis au cours de leur transfert du four à la machine de trempe.

Dans d'autres installations, la trempe thermique s'effectue dans des équipements thermiques, usuellement d'assez grande longueur, comportant une partie de chauffage et une partie de refroidissement. Les articles sont transportés de l'entrée vers la sortie de ces équipements et sont tout d'abord réchauffés à une température telle qu'ils soient amenés dans un état viscoélastique puis refroidis rapidement jusqu'à ce qu'ils soient dans un état quasi élastique.

Il est connu de transporter les produits à tremper soit en les plaçant dans des paniers individuels métalliques supportés par des tiges verticales, souvent entraînées en rotation, soit en les posant sur un tapis métallique. Les premières installations sont usuellement appelées "lignes à tournettes" et utilisées pour des produits peu stables et risquant de se renverser sous l'effet des courants d'air à grande vitesse mis en oeuvre pendant la trempe, tandis que les secondes sont usuellement appelés "lignes à tapis".

L'augmentation de la résistance des produits aux chocs mécaniques et thermiques après la trempe thermique tient à une mise en compression des surfaces extérieures des parois, usuellement de 100 à 150 MPa.

Cette mise en compression est due au fait que les surfaces des parois se refroidissent beaucoup plus vite que l'intérieur ce qui crée un gradient thermique important dans l'épaisseur du matériau auquel correspond un gradient de contraction. La partie extérieure de la paroi prend au cours de la trempe, un comportement quasi élastique alors que l'intérieur plus chaud a encore un comportement viscoélastique ce qui provoque une relaxation à l'intérieur des contraintes imposées par l'extérieur.

A la fin du refroidissement, les surfaces externes sont soumises à une compression équilibrée par la tension de la zone centrale. Pour obtenir une trempe de bonne qualité sans déformation des articles, il est nécessaire que la trempe soit équilibrée, c'est-à-dire que la somme algébrique des tensions et compressions dans une demi-épaisseur soit nulle.

Dans les installations connues, la trempe est réalisée en soufflant dans l'équipement de l'air sous pression ou un autre gaz tel que du CO₂ à partir de buses dirigées vers les articles. Ces buses sont immobiles et les articles défilent devant elles, éventuellement en tournant sur eux-mêmes ce qui entraîne une non-homogénéité du refroidissement nuisible à la bonne qualité de la trempe.

Dans certaines installations, une ou des buses sont amenées devant l'ouverture des produits à tremper afin de refroidir leur intérieur. Ces buses se déplacent en même temps que les produits tandis que ceux-ci défilent devant les buses fixes destinées au refroidissement de l'extérieur. Malgré ce que l'on peut croire à priori, cette disposition n'améliore pas la qualité de la trempe car elle crée un déséquilibre très important entre les conditions de refroidissement de l'extérieur et de l'intérieur de l'article.

Les problèmes à résoudre pour effectuer une trempe de bonne qualité sont encore plus complexes lorsque l'article est à paroi fine car le gradient thermique nécessaire pour créer les tensions et compressions recherchées est très élevé, les coefficients d'échange par convection doivent alors être très importants.

La présente invention tend à proposer une installation permettant d'améliorer de manière importante la trempe thermique des articles creux en verre.

L'invention sera mieux comprise grâce à la description qui va suivre donnée à titre d'exemple non limitatif en référence aux dessins annexés dans lesquels :

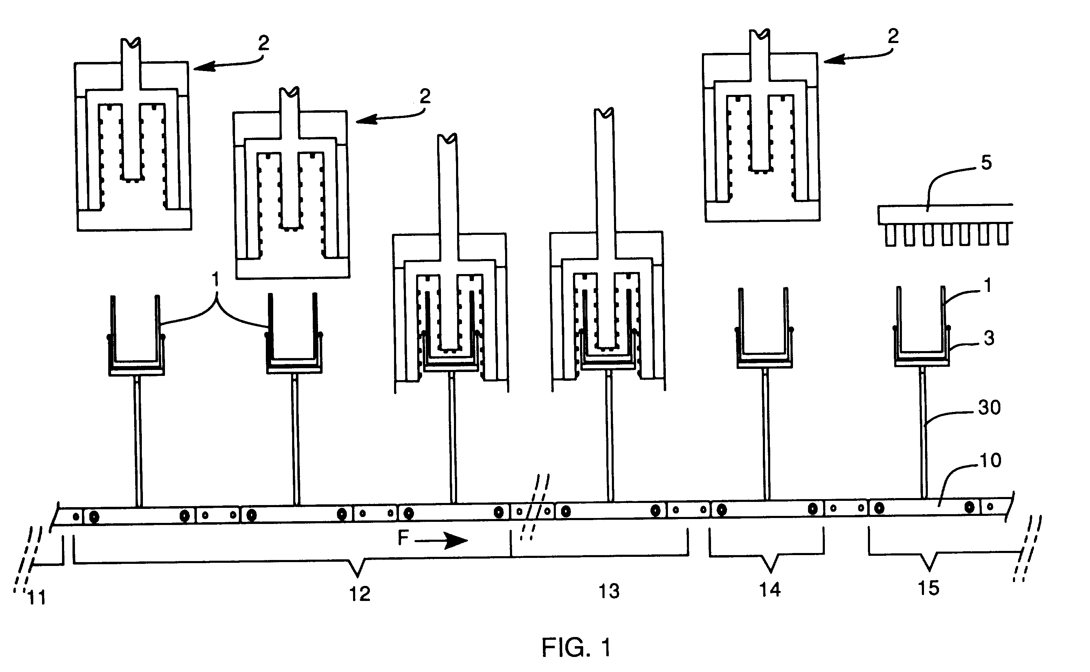

- la figure 1 est une vue schématique d'une installation de trempe suivant l'invention,
- la figure 2 est une vue en coupe longitudinale d'une tête de refroidissement mise en oeuvre suivant l'invention.

La figure montre de manière schématique les différentes étapes auxquelles sont soumis les articles 1 dans l'installation de traitement thermique suivant l'invention.

Le traitement thermique est réalisé dans un équipement de grande longueur dans lequel les articles 1 à traiter sont déplacés dans le sens de la flèche F par des moyens moteurs tels qu'une chaîne 10.

La première zone 11 de l'équipement est un four dans lequel les articles sont réchauffés jusqu'à une température telle que leur viscosité soit inférieure à une valeur de l'ordre de 10¹¹ poises représentant un état viscoélastique du verre.

A la suite du four proprement dit, l'équipement présente une seconde zone 12 dans laquelle des têtes de trempe 2 selon l'invention sont abaissées de manière telle que chacune surmonte un article. Cette zone 12 est constituée par une portion de l'équipement de grande longueur, ceci permet de conserver les articles dans l'ambiance chaude avant le traitement de trempe et donc d'améliorer la qualité de ce traitement. De manière avantageuse, il est prévu de contrôler la température de cette zone afin de maintenir les articles en température.

Au cours de la traversée de la troisième zone 13, les têtes de trempe 2 restent positionnées autour des articles à tremper. C'est dans cette troisième zone 13 que se produit la trempe thermique desdits articles, cette trempe étant réalisée de manière individuelle pour chaque article 1. Cette trempe est poursuivie jusqu'à ce que l'article présente une viscosité supérieure à 10^{14,5} poises.

A la suite de cette trempe, les têtes de trempe 2 sont soulevées dans la quatrième zone 14 de l'équipement.

Enfin, le refroidissement des articles 1 jusqu' à une température permettant leur manipulation est effectué dans la cinquième zone 15 de l'équipement suivant l'invention. Dans cette zone est disposée une rampe 5 portant des buses délivrant de l'air de refroidissement.

Dans l'exemple représenté, les articles 1 sont transportés d'une manière semblable à celle utilisée dans les installations connues sous l'appellation "lignes à tournettes". Ils sont placés dans des paniers individuels métalliques 3 supportés par des tiges verticales 30.

Lesdites tiges verticales 30 sont solidarisées aux moyens moteurs 10 afin d'être déplacées en translation avec ceux-ci dans l'équipement de traitement.

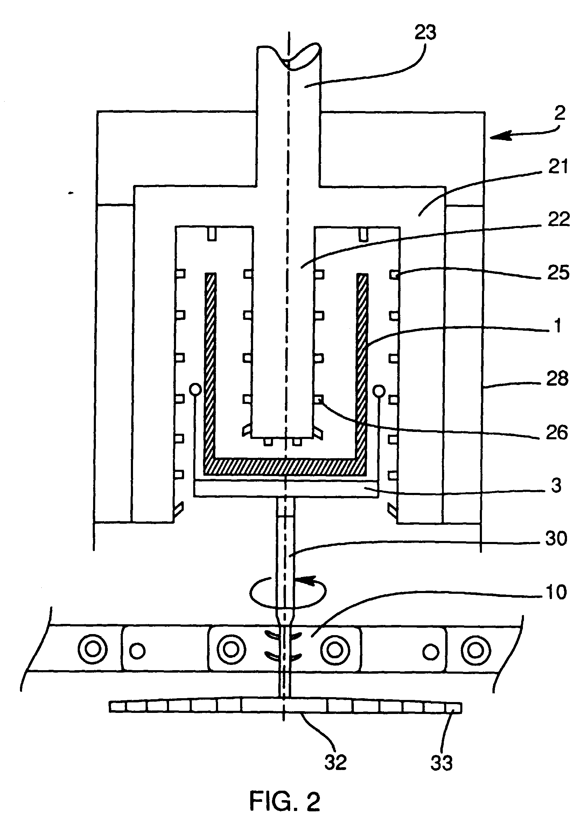

Dans l'exemple de réalisation montré à la figure 2, les tiges verticales 30 portent à leur extrémité inférieure un pignon denté 32 dont les dents sont en prise avec une crémaillère 33 de manière à provoquer sa rotation au cours de son avancement dans l'équipement. La crémaillère 33 peut être formée par un chaîne dans les maillons de laquelle s'engrènent les dents du pignon 32.

La figure 2 montre en détail la tête de trempe 2 suivant l'invention.

Cette tête de trempe 2 est principalement constituée de gaines de distribution du fluide de refroidissement, généralement air ou CO₂. L'on distingue une gaine externe 21 et une gaine interne 22 alimentées en fluide de refroidissement par la gaine d'alimentation 23.

La gaine externe 21 porte des buses externes 25 régulièrement réparties à sa surface interne et tournées vers l'intérieur.

La gaine externe 21 peut être constituée par un cylindre, des secteurs de cylindres ou un ensemble d'au moins deux bras régulièrement répartis circonférentiellement.

La gaine interne 22 est disposée axialement à l'intérieur de la gaine externe 21 et porte des buses internes 26 régulièrement réparties à sa surface et dirigées vers l'extérieur.

Comme représenté à la figure 2, la tête de trempe 2 est conformée de manière à pouvoir être positionnée avec sa gaine externe 21 autour de la paroi de l'article à traiter et sa gaine interne 22 dans le volume interne dudit article à traiter.

Les têtes de trempe selon l'invention doivent être de conformation et de dimensions adaptées à chaque type d'article à traiter.

Afin d'isoler convenablement l'article en cours de traitement de l'équipement dans lequel il circule et d'améliorer ainsi l'efficacité de la trempe, la tête de trempe 2 porte un capot 28.

De manière préférée, les buses internes 26 et externes 25 sont disposées en vis-à-vis de manière à refroidir de manière symétrique les deux surfaces externes de la paroi de l'article à tremper ce qui améliore l'effet de la trempe.

La tête de trempe 2 est entraînée en translation de manière synchronisée avec les paniers portant les articles par des moyens non représentés aux dessins.

L'on peut également entraîner la tête de trempe en rotation autour de son axe vertical avec une vitesse de rotation choisie de manière à optimiser la trempe en fonction de l'article à traiter, spécialement en fonction de son épaisseur. L'on peut encore améliorer la trempe en entraînant la tête de trempe dans un mouvement alternatif vertical de haut en bas de faible amplitude.

La mise en oeuvre d'une installation suivant l'invention permet d'optimiser de manière tout à fait intéressante le procédé de trempe en fonction de l'article à traiter.

Dans le cadre de cette optimisation, l'installation suivant l'invention permet de débuter le soufflage du fluide de refroidissement et donc la trempe thermique soit dès le début de la descente de la tête de trempe vers l'article, soit lorsque celle-ci est convenablement disposée autour dudit article, soit à tout moment intermédiaire en fonction des caractéristiques dudit article.

La trempe thermique de certains articles peut ainsi être débutée dès la zone 12 de l'équipement.

Il est également possible pour certains articles d'assurer une descente très lente des têtes de trempe tout en assurant le soufflage du fluide de refroidissement. La trempe desdits articles est ainsi effectuée au cours de la descente des têtes de trempe, celles-ci remontant pour s'écarter de l'article pratiquement dès la fin de leur course de descente.

Les zones 12 et 13 peuvent donc se chevaucher plus ou moins, voire même être confondues.

La quantité de fluide de refroidissement qui doit être utilisée est réduite par le fait que le fluide de refroidissement est contenu par le capot 28 et donc totalement mis en oeuvre pour le refroidissement de l'article, au lieu d'être gaspillé dans le volume de l'équipement comme dans les installations usuelles. L'on réduit ainsi considérablement les dépenses d'énergie.

Ces dépenses d'énergie sont encore réduites par le fait que le fluide de refroidissement est soufflé à peu de distance de l'article à traiter ce qui permet de limiter la pression de sortie des buses.

Ceci permet de plus une réduction du niveau de bruit de l'installation, ledit niveau de bruit étant de plus réduit par l'utilisation des capots 28.

Le fonctionnement de chaque tête de trempe, vitesse de rotation, débit de fluide,..., est individualisé et réglé en fonction de l'article qu'elle surmonte. Cette disposition permet de traiter des produits de formes semblables mais de caractéristiques différentes dans l'installation suivant l'invention.

Suivant une variante de réalisation non représentée au dessin, les articles sont transportés sur un tapis en étant positionnés sur un support surélevé de manière à permettre le positionnement de la tête de trempe.

Comme on aura pu le comprendre, la présente invention propose une installation traversée de manière continue par les articles à tremper, la mise en place et le retrait des têtes de trempe autour desdits articles étant faite au cours de ce déplacement, sans le perturber.

Cette disposition permet d'obtenir un traitement de trempe de meilleure qualité.

Bien que dans la description qui précède les articles sont entraînés par un seul convoyeur, la présente invention ne se limite pas à cette disposition. Plusieurs convoyeurs peuvent être utilisés en parrallèle lorsque les articles à traiter sont fabriqués à cadence élevée en amont de l'installation de trempe.

## Revendications

1. Installation de trempe thermique d'articles creux en verre dans laquelle les articles (1) à traiter sont déplacés longitudinalement dans un équipement de grande longueur du type comportant une première zone (11) dans laquelle les articles sont réchauffés puis une zone de trempe, caractérisée en ce que ladite zone de trempe est formée :
- d'une seconde zone (12) de l'équipement dans laquelle des têtes de trempe (2) sont abaissées jusqu'à ce que chacune surmonte un article (1), lesdites têtes de trempe étant entraînées en translation de manière synchronisée avec les articles (1),
- d'une troisième zone (13) de l'équipement dans laquelle les têtes de trempe (2) sont positionnées autour des articles et assurent leur trempe thermique de manière individuelle, lesdites seconde et troisième zones pouvant se chevaucher,
- d'une quatrième zone (14) de l'équipement dans laquelle les têtes de trempe (2) sont soulevées,
- d'une cinquième zone (15) de l'équipement dans laquelle est effectué le refroidissement des articles (1) jusqu'à une température permettant leur manipulation.

2. Installation selon la revendication 1, caractérisée en ce que la température de la seconde zone (12) est contrôlée afin de maintenir la température des articles.

3. Installation selon la revendication 1 ou selon la revendication 2, caractérisée en ce que la tête de trempe (2) est constituée d'une gaine externe (21) destinée à être positionnée autour de la paroi de l'article (1) et d'une gaine interne (22) destinée être positionnée dans le volume interne dudit article (1).

4. Installation selon la revendication 3, caractérisée en ce que lesdites gaines externe (21) et interne (22) sont alimentées en fluide de refroidissement par une gaine d'alimentation (23).

5. Installation selon la revendication 3 ou la revendication 4, caractérisée en ce que la gaine externe (21) porte des buses externes (25) régulièrement réparties à sa surface interne et tournées vers l'intérieur.

6. Installation selon l'une quelconque des revendications 3 à 5, caractérisée en ce que la gaine interne (22) est disposée axialement à l'intérieur de la gaine externe (21) et porte des buses internes (26) régulièrement réparties à sa surface et dirigées vers l'extérieur.

7. Installation selon la revendication 5 et la revendication 6, caractérisée en ce que les buses internes (26) et externes (25) sont disposées en vis-a-vis.

8. Installation selon l'une quelconque des revendications précédentes, caractérisée en ce que la tête de trempe (2) porte un capot (28) afin d'isoler convenablement l'article en cours de traitement de l'équipement dans laquelle il circule.

9. Installation selon l'une quelconque des revendications précédentes, caractérisée en ce que les têtes de trempe (2) sont entraînées en rotation autour de leur axe vertical.

10. Installation selon l'une quelconque des revendications précédentes, caractérisée en ce que le réchauffage des articles (1) dans la première zone (11) est réalisé jusqu'à une température telle que leur viscosité soit inférieure à une valeur de l'ordre de 10¹¹ poises, et en ce que la trempe est réalisée pour chaque article (1) jusqu'à ce que sa viscosité soit supérieure à 10^{14,5} poises.

11. Tête de trempe caractérisée en ce qu'elle est destinée à être utilisée dans une installation suivant l'une quelconque des revendications 1 à 9.
